# EUROPEAN PATENT SPECIFICATION

(11) **EP 2 621 044 B1**
(45) Date of publication and mention of the grant of the patent: **29.04.2020**
(21) Application number: 13151918.3
(22) Date of filing: 18.01.2013
(51) Int. Cl.: H02H 7/06, H02P 9/14, H02P 9/00

(54) **Overvoltage protection during GCU failure**
Überspannungsschutz während einer Generatorsteuerungsstörung
Protection contre les surtensions lors d'une défaillance GCU

(30) Priority: 18.01.2012 US 201213352768
(43) Date of publication of application: 31.07.2013
(73) Proprietor: Hamilton Sundstrand Corporation, Windsor Locks, CT 06096-1010 (US)
(72) Inventor: Maddali, Vijay K., Rockford, IL 61114 (US); Wagner, Carl A., Beloit, WI 53511 (US)
(74) Representative: Dehns

(56) References cited:
- EP-A2- 1 130 765
- JP-A- 2003 324 996
- US-B1- 6 850 043

## Description

### BACKGROUND OF THE INVENTION

The present invention generally relates to generator control units (GCU), and more particularly, exemplary embodiments of the present invention relate to overvoltage protection during GCU failures.

Conventionally, an aircraft power generating system is controlled by a GCU such that generator output voltage is regulated during normal operations. The GCU may also limit a generator's output current to be within specified limits during fault conditions, such as short circuits at output terminals. In variable frequency generating systems, there may be a potential for significant overvoltage if an associated generator is over-excited due to GCU failure, or multiple smaller failures within a GCU.
A generator comprising means for attenuating the field current of the generator when the output voltage or the field current is abnormal, preventing thereby overvoltage at the output of the generator, is known from JP2003-324996.

### BRIEF DESCRIPTION OF THE INVENTION

The present invention provides an overvoltage protection system for a generator of a power generating system, comprising a generator control relay (GCR) controlling a conduction path between a generator control unit and a generator exciter field, a flyback impedance in parallel communication with the generator exciter field, the flyback impedance being configured to dissipate energy from the generator exciter field in response to opening of the conduction path, a gate drive configured to open and close the GCR, and an overvoltage prevention unit in signal communication with the gate drive, the overvoltage prevention unit being configured to monitor a voltage and a current associated with the generator and selectively output a control signal to the gate drive to open and close the conduction path controlled by the GCR in response to the monitored voltage and current, the control signal being output selective to both whether an overvoltage fault exist and whether an overcurrent fault exists.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic of an overvoltage protection system for a power generating system according to an exemplary embodiment of the present invention;
FIG. 2 is a flowchart of a method of overvoltage protection for a power generating system according to an exemplary embodiment of the present invention; and
FIG. 3 is a flowchart of an alternative method of overvoltage protection for a power generating system according to an exemplary embodiment of the present invention.

### DETAILED DESCRIPTION OF THE INVENTION

According to exemplary embodiments of the present invention, an overvoltage protection system is provided which reduces the risk of overvoltage in power generating systems, even in the event of a generator control unit (GCU) failure. The technical effects and benefits of exemplary embodiments of the present invention include broader protection for power generating systems under a variety of conditions.

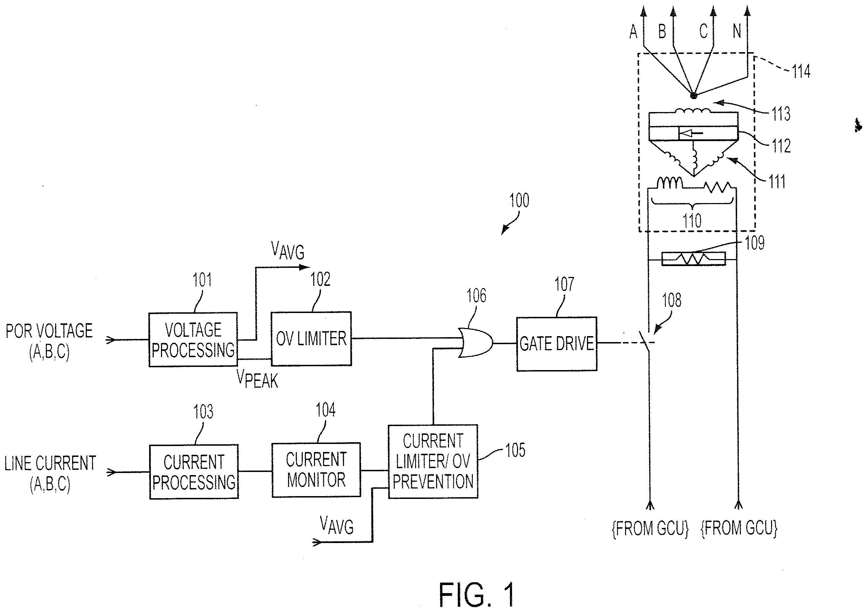

Turning to FIG. 1, a schematic of an overvoltage protection system 100 for a GCU is illustrated. As shown, the system 100 includes voltage processing unit 101. The voltage processing unit 101 is configured to sense point of regulation (POR) voltage(s) for a generator 114. The generator 114 may include exciter 111 with an associated exciter field 110, bridge rectifier 112 in communication with the exciter, and main field 113 in communication with the bridge rectifier 112. The sensed POR voltages from the generator may be three-phase (A,B,C) voltages. The voltage processing unit 101 is further configured to determine an average value of the POR voltage, V_{AVG}, and output the same to current limiter 105. The voltage processing unit 101 is further configured to determine a maximum peak voltage, Vpeak, and output the same to overvoltage limiter 102. The overvoltage limiter 102 may be a limiting device configured to activate an overvoltage signal, fault, or flag in the event Vpk exceeds valid design or desired thresholds.

The system 100 further includes current processing unit 103. The current processing unit 103 is configured to sense line current(s) for the main generator 114. Thus, the current processing unit 103 may be in current sensing communication with the generator 114, such that actual line current(s) of the main generator 114 may be sensed. The line current(s) may be a three phase (A,B,C) current(s), depending upon any desired implementation. The current processing unit 103 is further configured to determine a peak value of the line current, and output the same to the current monitor 104. The current monitor 104 is configured to monitor the peak value output from current processing unit 103, and compare the same to a desired range of applicable current, for example, as compared to a target current curve profile for appropriate operation of the generator and/or power generating system. The output of the comparison is provided to current limiter / overvoltage prevention unit 105. The current limiter / overvoltage prevention unit 105 is configured to process the current information received from the current monitor 104 and the average voltage V_{AVG} to determine if an overcurrent condition exists, and is further configured to activate an overcurrent signal, fault, or flag if the monitored current exceeds valid design or desired thresholds.

As illustrated, the current limiter / overvoltage prevention unit 105 provides the fault information to logic unit 106. Furthermore, logic unit 106 receives overvoltage fault information from overvoltage limiter 102. The logic unit 106 outputs a positive (e.g., logical 1) control signal whenever either or both of an overvoltage or an overcurrent fault exists to gate drive 107. Gate drive 107 is configured to drive (e.g., open / close) generator control relay (GCR) 108 depending upon the control signals received from logic unit 106. The GCR 108 is configured to sever a conduction path between the GCU and the exciter field 110 of the generator. Thus, if fault information processed at logic unit 106 is indicative of a fault, the gate drive 107 may open or modulate the GCR 108 to drive down exciter field current or sever the connection entirely. Whenever the conduction path is severed, a shunt flyback impedance 109 is provided to allow power within the exciter field 110 to dissipate relatively quickly. The flyback impedance 109 may include a set of transient voltage suppressors (transorbs) and/or a relatively high resistance in series with a control switch.

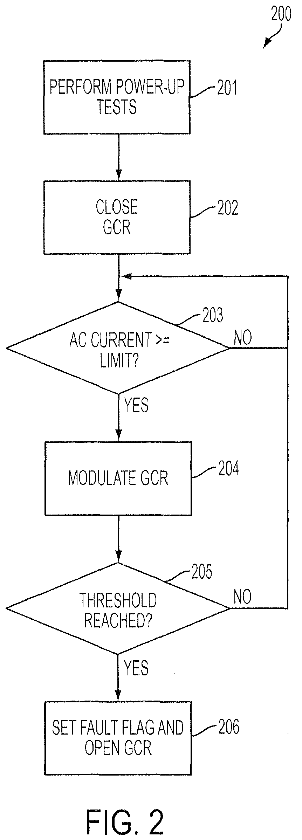

Therefore, as described above, a topology for a protective system is provided which operates in unison with a GCU to limit and mitigate the risk of overvoltage even in the event of GCU failure. Hereinafter, a methodology describing the logical execution of the current limiter / overvoltage prevention unit 105 is described with reference to FIG. 2.

Turning to FIG. 2, a method of overvoltage protection for a GCU is provided. As shown, the method 200 includes performing power-up tests of protection circuitry at block 201. The power-up tests may include injecting a sequence of phase-shifted test signals of varying amplitudes at respective POR voltage and line current inputs of voltage processing and current processing units 101 and 103. The test signals may be used to simulate a fault, short circuit, or other scenario. After testing, the method 200 includes closing a GCR at block 202. For example, closing the GCR may include supplying a control signal to gate drive 107 indicative of a system power-up or by issuing a GCR close request to the gate drive 107.

Thereafter, the method 200 includes determining if actual line current of main generator 114 is at or above a design threshold at block 203. If line current is normal or within operating specifications, for example as determined through comparison with a target current curve, the GCR may remain closed and current may be continually monitored at block 203. Alternatively, if the actual line current of the main generator 114 is at or above design thresholds, the method 200 may include modulating the GCR 108 to limit the actual line current.

For example, modulating the GCR may include providing a pulse-width modulated (PWM) control signal to gate drive 107 which provides for the opening and closing of the GCR 108 at predetermined intervals. The PWM control signal may have any desirable duty cycle configured to limit the actual line current of the main generator 114. During modulation, the method 200 includes determining if an overall threshold has been reached at block 205.

According to at least one exemplary embodiment, an overall threshold may be a configurable time period at which a main generator may operate at elevated current or elevated voltage. Thus, if the configurable time period has lapsed, a fault flag may be set and the GCR may be opened and stay opened such that the electrical connection to the excited field 110 is severed at block 206. The time period may be measured through hardware or software based counters enabled within the current limiter / OV prevention unit 105. Alternatively, a clocking system may be integrated to measure time expired during overcurrent conditions.

Turning back to FIG. 2, if the overall threshold has not been reached, monitoring may be continued at block 203 until either a current limit is within design specifications or a fault is thrown at block 206.

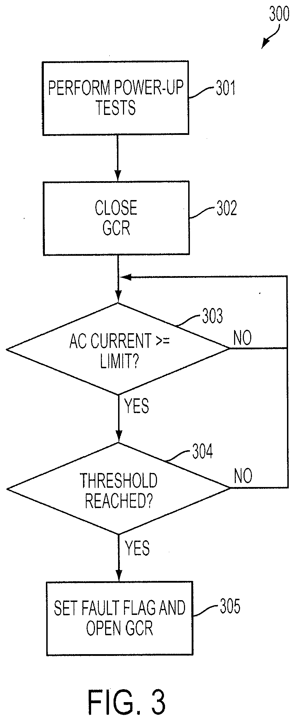

Turning now to FIG. 3, an alternative method of overvoltage protection for a GCU is provided. As shown, the method 300 is somewhat similar to the method 200, however lacking GCR modulation as described below.

The method 300 includes performing power-up tests of protection circuitry at block 301. The power-up tests may include injecting a sequence of phase-shifted test signals of varying amplitudes at respective POR voltage and line current inputs of voltage processing and current processing units 101 and 103. The test signals may be used to simulate a fault, short circuit, or other scenario. After testing, the method 300 includes closing a GCR at block 302. For example, closing the GCR may include supplying a control signal to gate drive 107 indicative of a system power-up or by issuing a GCR close request to the gate drive 107.

Thereafter, the method 300 includes determining if actual line current of main generator 114 is at or above a design threshold at block 303. If line current is normal or within operating specifications, for example as determined through comparison with a target current curve, the GCR may remain closed and current may be continually monitored at block 303. Alternatively, if the actual line current of the main generator 114 is at or above design thresholds, the method 300 may include determining if an overall threshold has been reached at block 304.

According to at least one exemplary embodiment, an overall threshold may be a configurable time period at which a main generator may operate at elevated current or elevated voltage. Thus, if the configurable time period has lapsed, a fault flag may be set and the GCR may be opened and stay opened such that the electrical connection to the excited field 110 is severed at block 305. The time period may be measured through hardware or software based counters enabled within the current limiter / OV prevention unit 105. Alternatively, a clocking system may be integrated to measure time expired during overcurrent conditions.

Turning back to FIG. 3, if the overall threshold has not been reached, monitoring may be continued at block 303 until either a current limit is within design specifications or a fault is thrown at block 305.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are within scope of the invention as defined by the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An overvoltage protection system (100) for a generator (114) of a power generating system, comprising:
a generator control relay (GCR) (108) controlling a conduction path between a generator control unit (GCU) and a generator exciter field (110);
a flyback impedance (109) in parallel communication with the generator exciter field, the flyback impedance being configured to dissipate energy from the generator exciter field in response to opening of the conduction path;
a gate drive (107) configured to open and close the GCR; and
an overvoltage prevention unit in signal communication with the gate drive, the overvoltage prevention unit being configured to monitor a voltage and a current associated with the generator and selectively output a control signal to the gate drive to open and close the conduction path controlled by the GCR in response to the monitored voltage and current, **characterized in that** the overvoltage prevention unit is configured to output
the control signal selective to both whether an overvoltage fault exists and whether an overcurrent fault exists.

2. The system of claim 1, further comprising a current monitor (104) in signal communication with the overvoltage prevention unit, the current monitor being configured to compare a peak current of the generator with a predetermined current limit curve and provide an output of the comparison to the overvoltage prevention unit.

3. The system of claim 2, further comprising a current processing unit (103) in current sensing communication with the generator and in signal communication with the current monitor, the current processing unit being configured to sense and process the line current of the generator.

4. The system of claim 1 or 3, further comprising a voltage processing unit (101) in voltage sensing communication with the generator and in signal communication with the overvoltage prevention unit, the voltage processing unit being configured to sense and average a point of regulation voltage of the generator.

5. The system of claim 4, further comprising an overvoltage limiter unit (102) in signal communication with the voltage processing unit and the gate drive, the overvoltage limiter unit being configured to signal a fault condition if a peak voltage provided by the voltage processing unit is above a predetermined value.

6. The system of claim 5, wherein the overvoltage prevention unit is configured to perform a method of overvoltage protection, the method comprising:
determining if line current of the generator is at or above a design threshold; and
modulating the GCR between open and closed states to reduce the line current in response to the determining.

7. The system of claim 6, wherein modulating the GCR comprises:
providing a pulse-width modulated (PWM) control signal to the gate drive.

8. The system of claim 7, wherein the PWM control signal includes a duty cycle configured to limit the line current of the generator.

9. The system of claim 8, wherein the method further comprises:
determining if an overall protection threshold has been reached in response to the modulating; and
if the overall protection threshold has been reached, opening the GCR to sever the conduction path of the exciter field, wherein the overall protection threshold includes a configurable time period of operation of the generator at elevated current levels or at elevated voltage levels.

## Patentansprüche

1. Überspannungsschutzsystem (100) für einen Generator (114) eines Leistungserzeugungssystems, Folgendes umfassend:
ein Generatorsteuerungsrelais (GCR) (108), das einen Leitungsweg zwischen einer Generatorsteuerungseinheit (GCU) und einem Generatorerregerfeld (110) steuert;
eine Rücklaufimpedanz (109), die in paralleler Verbindung mit dem Generatorerregerfeld steht, wobei die Rücklaufimpedanz dazu konfiguriert ist, als Reaktion auf ein Öffnen des Leitungsweges, Energie von dem Generatorerregerfeld abzuleiten;
einen Gatetreiber (107), der dazu konfiguriert ist, das GCR zu öffnen und zu schließen; und
eine Überspannungsschutzeinheit, die in Signalverbindung mit dem Gatetreiber steht, wobei die Überspannungsschutzeinheit dazu konfiguriert ist, eine Spannung und einen Strom zu überwachen, die dem Generator zugeordnet sind, und ein Steuerungssignal selektiv an den Gatetreiber auszugeben, um den Leitungsweg, der durch das GCR gesteuert wird, als Reaktion auf die überwachte Spannung und den überwachten Strom, zu öffnen und zu schließen, **dadurch gekennzeichnet, dass** die Überspannungsschutzeinheit dazu konfiguriert ist, das Steuerungssignal selektiv sowohl auszugeben, wenn eine Überspannungsstörung existiert, als auch wenn eine Überstromstörung existiert.

2. System nach Anspruch 1, ferner einen Strommonitor (104) umfassend, der in Signalverbindung mit der Überspannungsschutzeinheit steht, wobei der Strommonitor dazu konfiguriert ist, einen Spitzenstrom des Generators mit einer vorbestimmten Strombegrenzungskurve zu vergleichen und der Überspannungsschutzeinheit eine Ausgabe des Vergleichs bereitzustellen.

3. System nach Anspruch 2, ferner eine Stromverarbeitungseinheit (103) umfassend, die in Strommessverbindung mit dem Generator und in Signalverbindung mit dem Strommonitor steht, wobei die Stromverarbeitungseinheit dazu konfiguriert ist, den Leitungsstrom des Generators zu messen und zu verarbeiten.

4. System nach Anspruch 1 oder 3, ferner eine Spannungsverarbeitungseinheit (101) umfassend, die in Spannungsmessverbindung mit dem Generator und in Signalverbindung mit der Überspannungsschutzeinheit steht, wobei die Spannungsverarbeitungseinheit dazu konfiguriert ist, einen Regelspannungspunkt des Generators zu messen und zu mitteln.

5. System nach Anspruch 4, ferner eine Überspannungsbegrenzungseinheit (102) umfassend, die in Signalverbindung mit der Spannungsverarbeitungseinheit und dem Gatetreiber steht, wobei die Überspannungsbegrenzungseinheit dazu konfiguriert ist, eine Störungsbedingung zu signalisieren, wenn eine Spitzenspannung, die durch die Spannungsverarbeitungseinheit bereitgestellt wird, über einem vorbestimmten Wert liegt.

6. System nach Anspruch 5, wobei die Überspannungsschutzeinheit dazu konfiguriert ist, ein Verfahren zum Überspannungsschutz durchzuführen, wobei das Verfahren Folgendes umfasst:
Bestimmen, ob der Leitungsstrom des Generators bei einem vorgegebenen Schwellenwert liegt oder diesen überschreitet; und
Modulieren des GCR zwischen einem offenen und einem geschlossenen Zustand, um den Leitungsstrom als Reaktion auf das Bestimmen, zu reduzieren.

7. System nach Anspruch 6, wobei das Modulieren des GCR Folgendes umfasst:
Bereitstellen eines impulsbreitenmodulierten (PWM) Steuerungssignals für den Gatetreiber.

8. System nach Anspruch 7, wobei das PWM-Steuersignal einen Arbeitszyklus beinhaltet, der dazu konfiguriert ist, den Leitungsstrom des Generators zu begrenzen.

9. System nach Anspruch 8, wobei das Verfahren ferner Folgendes umfasst:
Bestimmen, ob ein Schwellenwert für umfassenden Schutz erreicht ist, als Reaktion auf das Modulieren; und
wenn der Schwellenwert für umfassenden Schutz erreicht ist, Öffnen des GCR, um den Leitungsweg des Erregungsfelds zu trennen, wobei der Schwellenwert für umfassenden Schutz eine konfigurierbare Zeitspanne für den Betrieb des Generators bei erhöhter Stromstärke oder bei erhöhter Spannungsstärke beinhaltet.

## Revendications

1. Système de protection contre les surtensions (100) pour un générateur (114) d'un système de génération d'énergie, comprenant :
un relais de commande de générateur (GCR) (108) commandant un chemin de conduction entre une unité de commande de générateur (GCU) et un champ d'excitation de générateur (110) ;
une impédance de retour (109) en communication parallèle avec le champ d'excitation de générateur, l'impédance de retour étant configurée pour dissiper l'énergie du champ d'excitation de générateur en réponse à l'ouverture du chemin de conduction ;
un entraînement de grille (107) configuré pour ouvrir et fermer le GCR ; et
une unité de prévention de surtension en communication de signal avec l'entraînement de grille, l'unité de prévention de surtension étant configurée pour surveiller une tension et un courant associés au générateur et émettre sélectivement un signal de commande à l'entraînement de grille pour ouvrir et fermer le chemin de conduction commandé par le GCR en réponse à la tension et au courant surveillés, **caractérisé en ce que** l'unité de prévention de surtension est configurée pour émettre le signal de commande sélectivement à la fois s'il existe un défaut de surtension et s'il existe un défaut de surintensité.

2. Système selon la revendication 1, comprenant en outre un moniteur de courant (104) en communication de signal avec l'unité de prévention de surtension, le moniteur de courant étant configuré pour comparer un courant de crête du générateur avec une courbe de limite de courant prédéterminée et fournir une émission de la comparaison à l'unité de prévention de surtension.

3. Système selon la revendication 2, comprenant en outre une unité de traitement de courant (103) en communication de détection de courant avec le générateur et en communication de signal avec le moniteur de courant, l'unité de traitement de courant étant configurée pour détecter et traiter le courant de ligne du générateur.

4. Système selon la revendication 1 ou 3, comprenant en outre une unité de traitement de tension (101) en communication de détection de tension avec le générateur et en communication de signal avec l'unité de prévention de surtension, l'unité de traitement de tension étant configurée pour détecter et faire la moyenne d'un point de tension de régulation du générateur.

5. Système selon la revendication 4, comprenant en outre une unité de limitation de surtension (102) en communication de signal avec l'unité de traitement de tension et l'entraînement de grille, l'unité de limitation de surtension étant configurée pour signaler une condition de défaut si une tension de crête fournie par l'unité de traitement de tension est au-dessus d'une valeur prédéterminée.

6. Système selon la revendication 5, dans lequel l'unité de prévention de surtension est configurée pour exécuter un procédé de protection contre les surtensions, le procédé comprenant :
le fait de déterminer si le courant de ligne du générateur est égal ou supérieur à un seuil de conception ; et
la modulation du GCR entre les états ouvert et fermé pour réduire le courant de ligne en réponse à la détermination.

7. Système selon la revendication 6, dans lequel la modulation du GCR comprend :
la fourniture d'un signal de commande modulé en largeur d'impulsion (PWM) à l'entraînement de grille.

8. Système selon la revendication 7, dans lequel le signal de commande PWM comporte un rapport cyclique configuré pour limiter le courant de ligne du générateur.

9. Système selon la revendication 8, dans lequel le procédé comprend en outre :
le fait de déterminer si un seuil de protection global a été atteint en réponse à la modulation ; et
si le seuil de protection global a été atteint, l'ouverture du GCR pour couper le chemin de conduction du champ d'excitation, dans lequel le seuil de protection global comporte une période de temps configurable de fonctionnement du générateur à des niveaux de courant élevés ou à des niveaux de tension élevés.
